# EUROPEAN PATENT SPECIFICATION

(11) **EP 3 484 332 B1**
(45) Date of publication and mention of the grant of the patent: **07.09.2022**
(21) Application number: 17742573.3
(22) Date of filing: 13.07.2017
(51) Int. Cl.: A47J 43/14

(54) **DEVICE FOR OBTAINING EGG LIQUID**
VORRICHTUNG ZUR GEWINNUNG VON EIFLÜSSIGKEIT
DISPOSITIF POUR L'OBTENTION DE LIQUIDE D' OEUF

(30) Priority: 14.07.2016 EP 16001556
(43) Date of publication of application: 22.05.2019
(73) Proprietor: Moba Group B.V., 3771 VE Barneveld (NL)
(72) Inventor: RAMIREZ-HERNAN, Philippe, 4100 Seraing - Boncelles (BE)
(74) Representative: V.O.
(86) International application number: PCT/NL2017/050472
(87) International publication number: WO 2018/012972

(56) References cited:
- EP-A1- 1 205 140
- CN-A- 108 902 781
- DE-A1- 2 806 749
- US-A- 3 147 783
- US-A1- 2013 008 475
- US-A1- 2014 226 871

## Description

The present invention relates to a device for obtaining egg liquid from poultry eggs. Moreover the present invention concerns a method for obtaining egg liquid from poultry eggs, and a corresponding system for carrying out such method.

Such a device is widespread and well known in this field of industrial application where it is common use that poultry eggs are broken in breaker devices in such a way that albumen and yolk are collected in a first step, and in a second step to be processed separately. Examples are disclosed in US3147783A and US2013/008475A1. In the same field, US2014/226871A1 relates to a method for the detection of egg yolk in albumen comprising breaking an egg and EP1205140A1 discloses a separation apparatus for separating egg whites and egg yolks of eggs from which the shell has been removed.

For example there are breaker devices which break eggs wherein the breaker devices are provided with separate yolk collecting cups and albumen collecting cups, for example as disclosed in EP1988805. A further example of collecting yolk and albumen is shown in NL1010910. In this document it is disclosed to break the eggs is such a way that both yolk and albumen are received together in a gutter which is arranged obliquely to cause the liquid moving slightly downwardly. Such assembly is often called a chute. For subsequently separating albumen and yolk the gutter walls are slightly separated thus giving a sleeve in between through which albumen is flowing and dripping and falling downwardly whereas the yolk is moving to the distal end of the gutter, there falling into a big receptacle. Apparently both ways of collecting the liquid constituents, the first one with breaking and separating almost simultaneously, and the second one having the breaking and separating subsequently, have shown to give suitable results.

In the above specifically the routes for obtaining and collecting yolk and albumen are addressed. A further issue of high interest is the way of opening an egg. As can be read in the above documents as well there the eggs are cut by a knife, smashing from beneath such egg in an upward movement. The resulting mainly two egg shell halves are retained in side holding parts whereas the liquid is falling, streaming and dripping downwardly.

Although this method has been applied for many years it might be clear that on average always some liquid is lost whereas often egg shell parts are mixed in the liquid.

Another way of opening is presented for example in DE102009052976, in US5285750, in DE12004021315, in DD291471, or in WO0219881, disclosing the use of lasers for laser cutting such egg shells.

In US5285750 a CO2-laser or a Nd-YAG-laser is used from making a very small hole (0.5 - 1mm) in the egg shell for inoculation purposes.

In DD291471 and WO0219881 a laser is cutting the egg shell at the usual location about halfway the main (i.e. long) axis of an egg.

In DE102004021315 a machine for separating white and yolk from poultry eggs is disclosed. After two sided opening the liquid is blown out and subsequently collected. Clearly the following recipe and sequence of steps are explained and claimed,
- after the eggs having been arranged in an accelerator said eggs are accelerated such that the yolks within such eggs are moved to the egg blunt side;
- after such acceleration the eggs are placed substantially vertically in a recess thereby resting in a conical seat, with point at downside and blunt at upper side;
- decapitating said down side, either with a knife tip or with a laser,
- at at least one position at the upper side pricking through the egg shell thereby creating an according pinhole,
- blowing for example air through said pinhole in order to urge all liquid from said egg, and
- collecting all said liquid after having been blown out from the egg.

In this set-up performance of the device is highly dependent on the combination of features as there are,
- positioning and orienting an egg,
- succeeding in arranging suitable blowing holes, and
- blowing, for example blowing time, through such holes.

Although this breaker set-up provides well-defined liquid collecting much room for improvement has appeared.

For example in the way of positioning an egg too much freedom is left in this set-up. Moreover, in order to have well-determined liquid retrieval holes, egg shell treatment should be improved as well.

Document DE 28 06 749 A1 discloses a device for obtaining egg liquid from poultry eggs, comprising an egg holder for fixedly holding and positioning such egg along its main axis substantially vertically, an egg opening device for drilling a hole in the upper end of the egg and decapitating the lower end of the egg after having been positioned vertically, thereby having the liquid flowing downwardly into a liquid collection reservoir arranged underneath the egg holder, and a control device for controlling positioning such egg and driving said opening device and said egg holder.

The present invention aims to remedy such shortcomings of known systems. According to an aspect of the present invention, to that aim, there is provided a device as defined in claim 1.

It has appeared that by applying this invention nice results are obtained in collecting egg liquid, providing very advantageous, efficient and reliable egg liquid processing parameters and improved hygiene.

Further embodiments of the device of the invention are characterized by one or more of the following, extra advantageous features:
said opening device comprises a cutting tip extending substantially along a circle having a diameter d, with 5 < d < 20 mm;
said circle is arranged in a plane substantially perpendicular to said main axis;
said clamping device comprises two clamping hands;
said cutting tip comprises (or is provided by) a laser beam;
said laser beam is obtained by a system of lenses (and for example a laser source);
said system of lenses comprises at least an axicon lens;
said laser beam is generated by a CO2 laser device;
said laser beam is generated by a Nd:YAG laser device;
said device further comprises an egg shell parts suction mouth;
the device further comprising a gas blowing mouth;
the egg shell parts suction mount and gas blowing mouth can each be movable to (and away from) the egg ends, for subsequently removing cut shell parts and blowing egg liquid outwardly from such cut egg for urging the liquid flowing and falling and dripping downwardly from the egg;
said cutting tip is (or is provided by) an ultrasonic vibration generator;
said generator is a horn type vibrator; and
said horn is applied for both cutting by ultrasonic vibration and by suctioning egg shell parts.

It has appeared that, having such compact laser cutting device or ultrasonic cutting device, the set-up of the present invention is very suitable for replacing the prior art knife-breaker units as applied thus far.

In order to improve the methods for cutting eggs are available thusfar and having a way of working for the device as mentioned above, the method in accordance with the invention is defined in claim 8.

As a further big advantage of the device and the method according to embodiments of the present invention, hygiene is highly improved, in particular in case of the far more accurate treatment of this kind of cutting and removing shell parts. On the one side shell parts remaining in the liquid is substantially reduced whereas at the other side cross contamination by breaker knives (used in prior art methods) which are used subsequently many turns on a sequence of eggs, is avoided completely.

Moreover, having nicely rimmed opening holes as a result of the way of working of the present invention, consequently said blowing will be more efficient and suitable, thereby resulting in correspondingly improved performance as to egg liquid retrieval volumes.

The present invention furthermore comprises, a system as defined in claim 12.

In particular such system is characterized in that a blowing device for causing liquid outflow from an egg into a cup is obtained.

It has appeared that the system of the present invention gives advantages as to footprint, yield of liquid, and above all hygiene, both as to the liquid product, and with regard to the system parts having now highly reduced cleaning times.

Hereinafter the present invention will be explained in detail by making reference to a drawing, wherein,
FIGURE 1 shows a non-limiting embodiment of a device of the present invention in a first situation for opening an egg by means of laser cutting,
FIGURE 2 shows the device of FIGURE 1 in a second situation,
FIGURE 3 shows the device of FIGURES 1, 2 in a third situation,
FIGURE 4 shows a further embodiment of a device of the present invention in a situation for opening an egg by means of ultrasonic vibration cutting,
FIGURE 5 presents an embodiment of a system in accordance with the present invention comprising the device as shown in one of the preceding FIGURES 1, 2, 3, or 4, and
FIGURE 6 schematically shows a high power laser beam branching system for laser cutting a plurality of eggs.

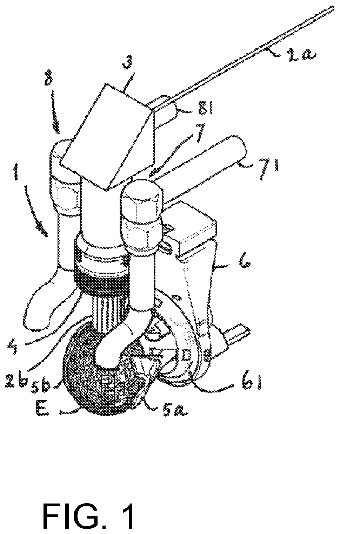

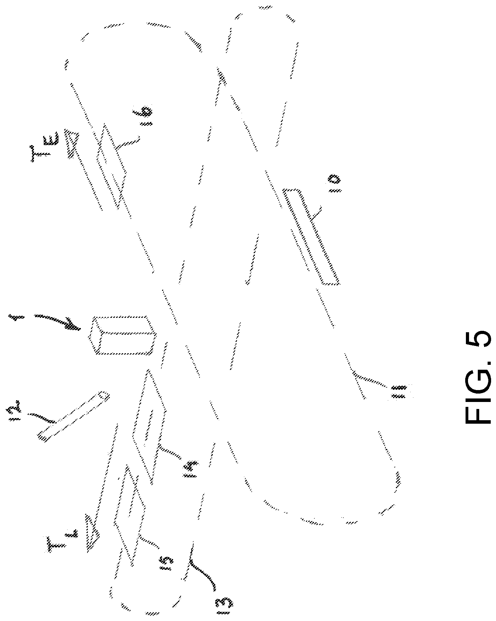

In the respective FIGURES same parts or indications are numbered or labeled identically. In FIGURE 1 an isometric view of a first embodiment of an egg opening device 1 in accordance with an example of the invention is shown, presenting a first working situation. The device 1 includes:
- an egg holder 5a, 5b, configured for holding an egg in a substantially vertical orientation (that is, with a main central axis of the egg being in a substantially vertical orientation, as in the drawings) ,
- an egg opening device for decapitating the egg, held by the holder 5a, 5b, at both ends
- at least one liquid collection reservoir 14 (see Fig. 5), for collecting egg liquid, the reservoir being arranged underneath the egg holder, and
- a control device 6 for controlling positioning such egg and driving said opening device and said egg holder.

More in particular this device of the first embodiment is a laser cutting device 1 for decapitating an egg E at both ends by means of laser light. In this first situation such laser light is supplied as a substantially horizontal incoming light beam 2a, subsequently bent by a mirror or beam splitter 3, processed by means of a lens system 4, an exposed to said egg as a cutting light beam 2b.

As shown in this FIGURE 1 the device 1 further comprises the egg gripper or holder, having gripper control 6, with gripper halves 5 a, b mounted on a gripper rotating unit, a liquid blowing unit with gas supply conduit 81, and an egg shell part suction unit 7 with suction guide 71.

As can be seen in FIGURE 1 the design of the gripper halve 5a is different from the design of halve 5b. For applicant who is owner of the MOPACK 100 product, as referred to in http://www.moba.net/page/nl/Packing/Moba-Farmpackers/Mopack-100, this design has been shown very suitable, more in particular to have a very suitable and certain way of gripping and holding. However different designs might be suitable as well. The egg E is gripped with its long axis substantially vertical.

It might be clear for a skilled person that many set-ups for a lens system 4 can be applied, for example comprising an axicon lens system (e.g. a lens or optical element that is configured for transforming an incoming laser beam into a ring i.e. said egg shell cutting tip-). The same can be said for the light, the optional blowing gas, for example air or nitrogen, and the working temperatures, gas pressures, and blowing times, for example light in frequency ranges as referred to above, about room temperature, up to 1.5 bar, and up to 2 seconds.

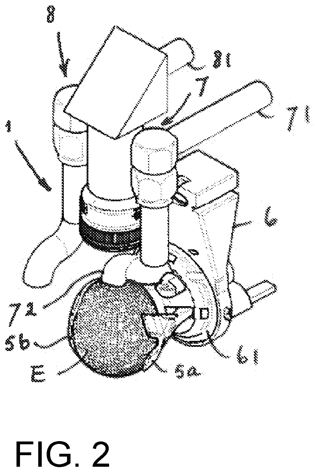

FIGURE 2 is showing the same device 1 in a subsequent working situation, i.e. after one end of egg E having been cut, the light beam is stopped or interrupted whereas a suction mouth 71 of the egg shell part suction unit is positioned upon the cut part to be suctioned away.

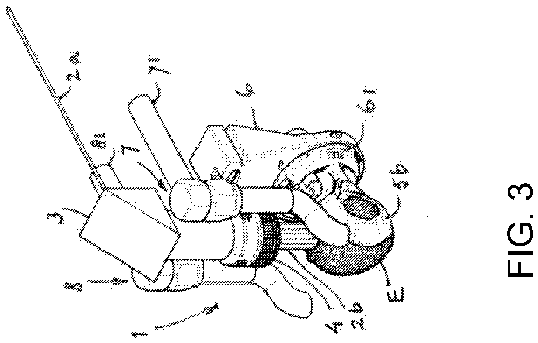

As can be seen in FIGURE 3 the Egg E is rotated, now having gripper halve 5b in the view direction. This is accomplished by rotating a gripper rotating 61, which is a part of the gripper control 6, over an angle of 180°, again with its long axis substantially vertical.

After having stopped the light beam, suction as explained with regards to FIGURE 2 is repeated thus giving a second opening, whereafter the blowing unit 8 with a blowing mouth end is positioned onto said second opening for blowing the blowing gas downwardly thereby causing an almost total egg liquid outflow.

Thus, from the above it follows that the device 1 can be configured to carry out the following steps in suitable order:
- positioning the egg E in a first substantially vertical orientation;
- decapitating one end of the egg, in particular an egg end facing upwards;
- rotating the egg E from the first substantially vertical orientation to a second substantially vertical orientation (i.e. over an angle of rotation of about 180 degrees);
- decapitating the other end of the egg (the other end e.g. facing upwards due to the rotation of the egg);
- collecting egg fluid from the decapitated egg E.

Herein, preferably, flow of egg fluid is enhanced or induced after the decapitations, by a flow inducer, for example by said blowing agent, e.g. gas or air. Also, preferably, each cut-off egg end is actively removed from the egg, e.g. by said suction mouth 71.

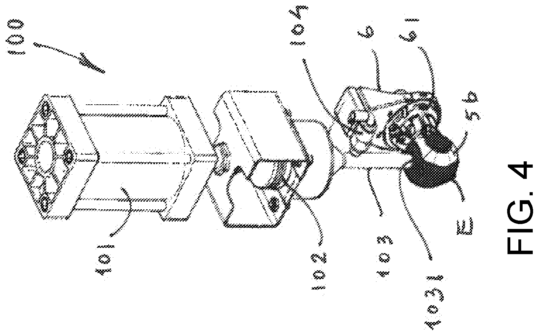

FIGURE 4 shows a further embodiment of a device 100 of the present invention for decapitating an egg E at both sides, i.e. an ultrasonic cutting unit 100, having ultrasonic vibration control. In the same way as explained above the egg E is positioned by means of said gripper halves 5a, b.

For starting the process of decapitating said unit is smoothly pressed onto an egg E by means of pneumatic drive, and subsequently the unit is switched to its ultrasonic vibration mode, giving ultrasonic vibrations at a beveled cutting edge 1031 being the end of an ultrasonic horn 103 of this unit 100. After switching off the vibration mode the same horn 103 is used as a suction guide through a suction tube 104. Subsequently the egg E is rotated with the gripper rotating unit 61 as explained before in order to expose the other end of the E to the ultrasonics cutting unit 100.

Further details of such ultrasonics vibration unit as such are explained and described in detail in JP2003266388 and in Hikaru MIURA, Eggshell Cutter Using Ultrasonic Vibration, Jpn. J. Appl. Phys. Vol 42 (2003), pp. 2996-2999.

For those skilled in the art it might be clear that controlling the pneumatic drive is of high interest to obtain suitable cuts. For example spring mounted edges may favor such cutting. Moreover said control may be based on simultaneous egg shell characteristics detection, for example in accordance with EP738888.

In FIGURE 5 schematically a system is presented which comprises a plurality of devices 1, 100 as explained hereinabove. For ease of explanation only one device 1 is shown to be applied on eggs supplied along one lane of an egg holder conveyor or egg supply conveyor 11. Eggs are picked up by said supply conveyor 11 from an egg pick-up station 10, wherein this conveyor 11 is an endless conveyor transporting the eggs as a row of eggs the one behind the other.

Such pick-up sections are well known from the MOPACK 100 egg packer, for example as published and described in the afore-mentioned website of Moba.

After such egg has been decapitated by the device 1, 100, the liquid containing both yolk and albumen is preferably blown out downwardly into e.g. a cup (or different reservoir) passing underneath said device 1, 100 and -in this example- being part of a corresponding one lane collection cup conveyor 13. This conveyor 13 is e.g. also an endless conveyor transporting the cups as a row of cups the one behind the other.

The transport directions of the respective conveyors 11, 13 are labeled T_{E}, egg conveyor transport direction, and T_{L}, egg liquid transport conveyor (see Fig. 5).

Positioning of the conveyors 11, 13 is such that their vertical endless conveyor planes are substantially perpendicular, whereas at the crossing of these conveyor planes the cutting device 1, 100 is arranged.

After the liquid from such egg has been received and collected the liquid is preferably observed and checked as to for example broken yolks, egg shell parts, color deviations, with a camera system 12, thereby obtaining signals and corresponding data which are processed in a central processing unit (CPU).

Processing the cups containing liquid can be programmed such that,
- in case of intact or almost intact yolk, without shell parts, the liquid is released to a yolk-albumen (YA) separation unit, and
- in all other cases the liquid is released to a so-called liquid-whole-egg (LWE) reservoir 15for further processing.

More in particular such YA and LWE processing is carried out as explained for example in the above referred NL1010910.

As will be clear for those skilled in the art usually said conveyors may comprise each more than one lane, for example 4, or 6, or 9, or even more.

In this FIGURE furthermore an empty shell collection reservoir 16.

In order to organize, simplify, and protect a multi-egg cutter system as much as possible, a single high power laser L is preferably applied. Conventionally high power lasers have power performances between 1 and 10 kW.

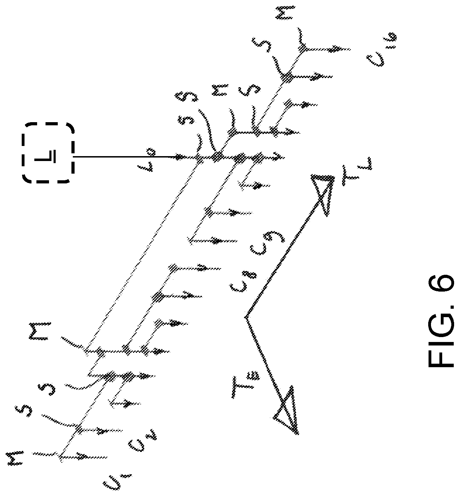

An embodiment for such a system is presented in FIGURE 6. For this specific system to be applied on a so-called 16 lane breaker device a single laser beam L0 (from a laser source L) is subdivided into 16 laser cutting beams C1 - C2 - ... - C16. For every C1 - C16 beam 4 beam splitters S are used. Because of necessity of changing the beams after splitting for some routes an additional mirror M is applied as well. The skilled person will appreciate that the multi-lane breaker device can also be associated with more or less than 16 lanes, and respective laser cutting beams, and that various optical means or optical elements can be present for subdividing or switching the laser beam L0, such that a suitable laser cutting beams is present at a desired egg cutter at a desired egg cutting period..

In FIGURE 6 for reason of simplicity only for some routes splitters S and mirrors M are shown. For this FIGURE 6 the plane of tree of routes an cutting beams C1 - ... - C16 is chosen perpendicular to the plane of lanes for the egg conveyor and to plane of the liquid conveyor, with directions of transport T_{E} and T_{L} as explained with reference to FIGURE 5. In this FIGURE 6 only one lane for the liquid conveyor is shown. It might be clear to a skilled person that a plurality of lanes in the 'liquid' direction is possible as well.

In this way, relatively large numbers of eggs can be processed (in particular emptied) in a reliable, efficient and very hygienic manner.

It should be clear to the person skilled in the art that the invention is not limited to the embodiments described above. Many alternatives are possible within the scope of protection as formulated in the claims hereafter.

Also, for example, the control device can be configured in various ways and can include one or more control means, suitable to carry out respective control steps that are to be taken by the control device, as will be appreciated by the skilled person.

### LEGENDA

- T_{-E}: transport direction egg conveyor
- T-_{L}: transport direction liquid conveyor
- E: egg
- L: Laser source
- L0: high power laser beam
- C1...C16: laser cutting beams
- S: beam splitters
- M: mirror
- 10: egg pick-up station
- 11: egg holder conveyor
- 12: camera system
- 13: collection cup conveyor
- 14: AY separation unit
- 15: LWE reservoir
- 16: empty shell collection reservoir
- 1: light cutting unit
- 2a: incoming light beam
- 2b: cutting light beam
- 3: mirror, beam splitter
- 4: lens system
- 5 a, b: gripper halves
- 6: gripper control
- 61: gripper rotating unit
- 7: egg shell part suction unit
- 71: suction guide
- 72: suction mouth
- 8: egg liquid blowing unit
- 81: gas supply guide
- 100: ultrasonics cutting unit
- 101: pneumatic drive
- 102: ultrasonics vibration control
- 103: ultrasonic horn
- 1031: beveled cutting edge
- 104: suction tube

## Claims

1. Device for obtaining egg liquid from poultry eggs, comprising,
- an egg holder (5a, 5b) for fixedly holding and positioning such egg (E) along its main axis substantially vertically,
- an egg opening device (1) for decapitating such egg at both ends after having been positioned vertically, thereby having the liquid falling and flowing downwardly into at least one liquid collection reservoir (14) arranged underneath the egg holder (5a, 5b), and
- a control device (6) for controlling positioning such egg (E) and driving said opening device and said egg holder (5a, 5b),
wherein said egg holder (5a, 5b) comprises a clamping device (5a, 5b, 6) for clamping an egg at both sides substantially parallel to its main axis which clamping device (5a, 5b, 6) is rotatable about a substantial horizontal axis.

2. Device in accordance with claim 1, **characterized in that,**
said opening device (1) comprises a cutting tip (2b) extending substantially along a circle having a diameter d, with 5 < d < 20 mm.

3. Device in accordance with claim 2, **characterized in that**
said circle is arranged in a plane substantially perpendicular to said main axis.

4. Device in accordance with any of the preceding claims, **characterized in that,**
said egg opening device (1) is configured to use a cutting tip (2b) comprising a laser beam (2b).

5. Device in accordance with one of the foregoing claims, **characterized in that,**
said device further comprises an egg shell parts suction mouth (7) and an gas blowing mouth (8), each movable to the egg ends for subsequently removing cut shell parts and blowing egg liquid outwardly from such cut egg (E) for urging the liquid flowing and falling and dripping downwardly from the egg (E).

6. Device in accordance with any of the preceding claims, **characterized in that,**
the device includes an ultrasonic vibration generator (100) for providing an egg cutting tip (103).

7. Device in accordance with any of the preceding claims, **characterized in that** the device includes a gripper rotating unit (61), which is part of a gripper control (6), configured to rotate the egg over an angle of 180°, with its long axis substantially vertical.

8. Method for collecting egg liquid from poultry eggs, the method for each egg (E) comprising the following subsequent steps,
- gripping the egg substantially at both sides of the egg (E) parallel to its main axis, wherein the egg (E) is positioned substantially vertically along its main axis,
- decapitating the egg (E) at both ends, and
- blowing from above into such end to urge the liquid flowing and falling downwardly into at least one liquid collection reservoir (14),
the method including decapitating the egg (E) at its upper end wherein said egg (E) is rotated about a short axis of the egg (E) after first decapitation.

9. Method according to claim 8, wherein each cut-off egg end is actively removed from the egg.

10. Method of claim 8 or 9, **characterized in that,**
the rotation is a rotation of substantially 180 degrees.

11. Method of one of the claims 8-10 carried out by using the device (1) of one of the claims 1 - 7.

12. System for collecting egg liquid from poultry eggs, the system including one or more of the devices according to any of claims 1-7, the system comprising,
- an egg supply device (11),
- an egg opening device (1),
- an egg liquid receiving device (14),
- a camera system (12) for detecting egg liquid content after flowing and falling of egg in a corresponding whole egg liquid collection cup,
- a yolk - albumen separation device (14),
- a yolk collection reservoir,
- an albumen collection reservoir, and
- a liquid whole egg collection reservoir.

13. System of claim 12, **characterized in that,**
a blowing device (8) for causing liquid outflow from an egg (E) into a cup is obtained.

## Patentansprüche

1. Vorrichtung zur Erhalten von Eierflüssigkeit aus Geflügeleiern, umfassend,
- einen Eierhalter (5a, 5b) zum festen Halten und Positionieren eines solchen Eies (E) entlang seiner Hauptachse im Wesentlichen vertikal,
- eine Eieröffnungsvorrichtung (1), um ein solches Ei an beiden Enden zu köpfen, nachdem es vertikal positioniert wurde, wodurch die Flüssigkeit nach unten in wenigstens einen Flüssigkeitssammelbehälter (14) fällt und fließt, der unter dem Eierhalter (5a, 5b) angeordnet ist, und
- eine Steuervorrichtung (6) zum Steuern der Positionierung eines solchen Eies (E) und zum Antreiben der Öffnungsvorrichtung und des Eierhalters (5a, 5b),
wobei der Eierhalter (5a, 5b) eine Klemmvorrichtung (5a, 5b, 6) zum Festklemmen eines Eies an beiden Seiten im Wesentlichen parallel zu seiner Hauptachse umfasst, wobei die Klemmvorrichtung (5a, 5b, 6) um eine im Wesentlichen horizontale Achse drehbar ist.

2. Vorrichtung nach Anspruch 1, **dadurch gekennzeichnet, dass** die Öffnungsvorrichtung (1) eine Schneidspitze (2b) aufweist, die sich im Wesentlichen entlang eines Kreises mit einem Durchmesser d, mit 5 ≤ d ≤ 20 mm, erstreckt.

3. Vorrichtung nach Anspruch 2, **dadurch gekennzeichnet, dass** der Kreis in einer Ebene angeordnet ist, die im Wesentlichen senkrecht zur Hauptachse steht.

4. Vorrichtung nach einem der vorhergehenden Ansprüche, **dadurch gekennzeichnet, dass** die Eieröffnungsvorrichtung (1) so eingerichtet ist, dass sie eine Schneidspitze (2b) verwendet, die einen Laserstrahl (2b) aufweist.

5. Vorrichtung nach einem der vorstehenden Ansprüche, **dadurch gekennzeichnet, dass** die Vorrichtung ferner eine Ansaugöffnung (7) für Eierschalenteile und eine Gasblasöffnung (8) aufweist, die jeweils zu den Eierenden hin beweglich sind, um anschließend abgeschnittene Schalenteile zu entfernen und Eierflüssigkeit von einem solchen abgeschnittenen Ei (E) nach außen zu blasen, um die Flüssigkeit zum Fließen und Fallen und Tropfen nach unten von dem Ei (E) zu bewegen.

6. Vorrichtung nach einem der vorhergehenden Ansprüche, **dadurch gekennzeichnet, dass** die Vorrichtung einen Ultraschall-Vibrationsgenerator (100) zum Bereitstellen einer Eierschneidespitze (103) aufweist.

7. Vorrichtung nach einem der vorhergehenden Ansprüche, **dadurch gekennzeichnet, dass** die Vorrichtung eine Greiferdreheinheit (61) aufweist, die Teil einer Greifersteuerung (6) ist, die so eingerichtet ist, dass sie das Ei um einen Winkel von 180° dreht, wobei seine Längsachse im Wesentlichen vertikal ist.

8. Verfahren zum Sammeln von Eierflüssigkeit aus Geflügeleiern, wobei das Verfahren für jedes Ei (E) die folgenden aufeinanderfolgenden Schritte umfasst,
- Greifen des Eies im Wesentlichen an beiden Seiten des Eies (E) parallel zu seiner Hauptachse, wobei das Ei (E) im Wesentlichen vertikal entlang seiner Hauptachse positioniert ist,
- Köpfen des Eies (E) an beiden Enden, und
- Blasen von oben in dieses Ende, um die fließende und nach unten fallende Flüssigkeit in wenigstens einen Flüssigkeitssammelbehälter (14) zu bewegen, wobei das Verfahren das Köpfen des Eies (E) an seinem oberen Ende umfasst, wobei das Ei (E) nach dem ersten Köpfen um eine kurze Achse des Eies (E) gedreht wird.

9. Verfahren nach Anspruch 8, wobei jedes abgeschnittene Eiende aktiv aus dem Ei entfernt wird.

10. Verfahren nach Anspruch 8 oder 9, **dadurch gekennzeichnet, dass** die Drehung eine Drehung von im Wesentlichen 180 Grad ist.

11. Verfahren nach einem der Ansprüche 8 bis 10, das unter Verwendung der Vorrichtung (1) nach einem der Ansprüche 1 bis 7 durchgeführt wird.

12. System zum Sammeln von Eierflüssigkeit aus Geflügeleiern, wobei das System eine oder mehrere der Vorrichtungen nach einem der Ansprüche 1 bis 7 einschließt, wobei das System umfasst,
- eine Eizufuhrvorrichtung (11),
- eine Eieröffnungsvorrichtung (1),
- eine Eierflüssigkeitsaufnahmevorrichtung (14),
- ein Kamerasystem (12) zum Erfassen des Eierflüssigkeitsgehalts nach dem Fließen und Fallen von Eiern in einem entsprechenden Sammelbecher für Flüssigkeit aus ganzen Eiern,
- eine Vorrichtung zum Trennen von Dotter und Eiweiß (14),
- einen Dottersammelbehälter,
- einen Eiweißsammelbehälter und
- einen Sammelbehälter für Flüssigkeit aus ganzen Eiern.

13. System nach Anspruch 12, **dadurch gekennzeichnet, dass** eine Blasvorrichtung (8) zum Ausströmen von Flüssigkeit aus einem Ei (E) in einen Becher erhalten wird.

## Revendications

1. Dispositif pour obtenir du liquide d'œuf à partir d'œufs de volaille, comprenant :
- un support d'œuf (5a, 5b) pour tenir de façon fixe et positionner un œuf (E) le long de son axe principal de façon substantiellement verticale,
- un dispositif d'ouverture d'œuf (1) pour trancher ledit œuf aux deux extrémités après qu'il a été positionné verticalement, ce qui provoque la chute et l'écoulement du liquide vers le bas, dans au moins un réservoir de collecte de liquide (14) placé sous le support d'œuf (5a, 5b), et
- un dispositif de commande (6) pour commander le positionnement dudit œuf (E) et pour piloter ledit dispositif d'ouverture et ledit support d'œuf (5a, 5b),
dans lequel ledit support d'œuf (5a, 5b) comprend un dispositif de serrage (5a, 5b, 6) pour serrer un œuf des deux côtés, substantiellement parallèlement à son axe principal, lequel dispositif de serrage (5a, 5b, 6) peut être mis en rotation autour d'un axe substantiellement horizontal.

2. Dispositif selon la revendication 1, **caractérisé en ce que** ledit dispositif d'ouverture (1) comprend un embout de coupe (2b) s'étendant substantiellement le long d'un cercle ayant un diamètre d, où 5 ≤ d ≤ 20 mm.

3. Dispositif selon la revendication 2, **caractérisé en ce que** ledit cercle est disposé dans un plan substantiellement perpendiculaire audit axe principal.

4. Dispositif selon l'une quelconque des revendications précédentes, **caractérisé en ce que** ledit dispositif d'ouverture d'œuf (1) est configuré pour utiliser un embout de coupe (2b) qui comprend un faisceau laser (2b).

5. Dispositif selon l'une des revendications précédentes, **caractérisé en ce que** ledit dispositif comprend en outre une bouche d'aspiration de parties de coquille d'œuf (7) et une bouche de soufflage de gaz (8), chacune d'entre elles étant mobile jusqu'aux extrémités de l'œuf pour retirer ensuite les parties de coquille coupées et pour souffler le liquide d'œuf vers l'extérieur depuis ledit œuf coupé (E) pour forcer le liquide à s'écouler, tomber et s'égoutter vers le bas depuis l'œuf (E).

6. Dispositif selon l'une quelconque des revendications précédentes, **caractérisé en ce que** le dispositif comporte un générateur de vibration ultrasonore (100) pour fournir un embout de coupe d'œuf (103).

7. Dispositif selon l'une quelconque des revendications précédentes, **caractérisé en ce que** le dispositif comporte une unité de rotation d'organe de préhension (61), qui fait partie d'une commande d'organe de préhension (6), configurée pour faire tourner l'œuf sur un angle de 180°, avec son grand axe substantiellement vertical.

8. Procédé de collecte de liquide d'œuf provenant d'œufs de volaille, le procédé comprenant pour chaque œuf (E) les étapes consécutives suivantes :
- saisir l'œuf substantiellement des deux côtés de l'œuf (E) parallèlement à son axe principal, l'œuf (E) étant positionné substantiellement verticalement le long de son axe principal,
- trancher l'œuf (E) aux deux extrémités, et
- souffler par le dessus dans une telle extrémité pour forcer le liquide à s'écouler et à tomber vers le bas dans au moins un réservoir de collecte de liquide (14),
le procédé comprenant le fait de trancher l'œuf (E) à son extrémité supérieure et dans lequel on fait tourner ledit œuf (E) autour d'un petit axe de l'œuf (E) après le premier tranchage.

9. Procédé selon la revendication 8, dans lequel on retire de l'œuf de manière active chaque extrémité d'œuf coupée.

10. Procédé selon la revendication 8 ou 9, **caractérisé en ce que** la rotation est une rotation substantiellement égale à 180 degrés.

11. Procédé selon l'une des revendications 8 à 10, exécuté en utilisant le dispositif (1) de l'une des revendications 1 à 7.

12. Système pour collecter du liquide d'œuf provenant d'œufs de volaille, le système comportant un ou plusieurs des dispositifs selon l'une quelconque des revendications 1 à 7, le système comprenant :
- un dispositif d'alimentation en œuf (11),
- un dispositif d'ouverture d'œuf (1),
- un dispositif récepteur de liquide d'œuf (14),
- un système de caméra (12) pour détecter le contenu de liquide d'œuf après l'écoulement et la chute d'œuf dans une coupe correspondante de collecte de liquide d'œuf entier,
- un dispositif de séparation de jaune et d'albumine (14),
- un réservoir de collecte de jaune,
- un réservoir de collecte d'albumine, et
- un réservoir de collecte d'œuf entier liquide.

13. Système selon la revendication 12, **caractérisé en ce que** l'on obtient un dispositif de soufflage (8) pour provoquer l'écoulement sortant de liquide d'un œuf (E) dans une coupe.
